Europäisches Patentamt

European Patent Office

Office européen des brevets

(19)

(11) Veröffentlichungsnummer: **0 160 276**
**B1**

(12) **EUROPÄISCHE PATENTSCHRIFT**

(45) Veröffentlichungstag der Patentschrift: 29.08.90

(21) Anmeldenummer: 85105077.3

(22) Anmeldetag: 26.04.85

(51) Int. Cl.⁵: **F 16 F 9/08**, F 16 F 9/54,
B 60 G 15/12

(54) **Pneumatische Feder-Dämpfer-Einheit.**

(30) Priorität: 30.04.84 DE 8413300 u

(43) Veröffentlichungstag der Anmeldung:
06.11.85 Patentblatt 85/45

(45) Bekanntmachung des Hinweises auf die
Patenterteilung:
29.08.90 Patentblatt 90/35

(84) Benannte Vertragsstaaten:
DE FR GB IT SE

(56) Entgegenhaltungen:
EP-A-0 027 356
DE-B-1 251 165
FR-A-2 427 922
US-A-2 922 635

(73) Patentinhaber: Gold, Henning, Prof. Dr.-Ing.
Im Rheinblick 24
D-6530 Bingen 1 (DE)

(72) Erfinder: Gold, Henning, Prof. Dr.-Ing.
Im Rheinblick 24
D-6530 Bingen 1 (DE)

(74) Vertreter: Freischem, Werner, Dipl.-Ing.
Patentanwälte Dipl.-Ing. W. Freischem Dipl.-Ing.
I. Freischem An Gross St. Martin 2
D-5000 Köln 1 (DE)

Courier Press, Leamington Spa, England.

## Beschreibung

Die Erfindung geht aus von der pneumatischen Feder-Dämpfer-Einheit gemäß dem Oberbegriff des Patentanspruches 1.

Eine pneumatische Feder-Dämpfer-Einheit dieser Art ist bekannt aus der beim Institut für Kraftfahrwesen und Kolbenmaschinen der rheinischwestfälischen technischen Hochschule Aachen vorliegenden Dissertationsschrift des Anmelders.

Diese Feder-Dämpfer-Einheit federt und dämpft ausschließlich mit Luft. Ihre Mittellage wird durch Nachfüllen oder Ablassen von Luft konstant gehalten. Dabei passen sich ihre Feder- und Dämpfungseigenschaften selbsttätig an die jeweilige Last an, sodaß diese Feder-Dämpfer-Einheit insbesondere für Fahrzeuge mit wechselnder Last geeignet ist und einen von der Zuladung unabhängigen Federungskomfort gewährleistet. Diese Feder-Dämpfer-Einheit hat ein frequenzselektives Dämpfungsverhalten und ermöglicht eine starke Dämpfung einer Resonanzschwingung, ohne bei überkritischer Anregung große Dämpferkräfte zu erzeugen.

Durch die FR—A—24 27 922 ist es darüber hinaus bekannt, bei einer Feder-Dämpfer-Einheit nach Art eines Federbeines an einem gelenkten Rad eines Kraftfahrzeuges zwischen dem Gehäuse des hydraulischen Dämpfers und dem Rollbalg, der als Luftfeder dient, eine Verdrehlagerung in Form einer Hülse vorzusehen. Zwischen der Hülse und deren gehäusefestem Lagerabschnitt ist ein Dichtring vorgesehen, der die Luftfeder gasdicht abschließt. Die Anordnung des Dichtringes ist dabei so getroffen, daß auf diesen von der Gasfeder ausgehende Axialkräfte wirken können, die die Abdichtung zusätzlich belasten.

Aufgabe der Erfindung ist es, die gattungsgemäße Feder-Dämpfer-Einheit derart weiterzubilden, daß neben einer einfachen, robusten Konstruktion eine weitgehende Entlastung der Abdichtung durch die Gaskräfte erzielt ist.

Diese Aufgabe wird erfindungsgemäß mit den kennzeichnenden Merkmalen des Patentanspruches 1 gelöst. Vorteilhafte und zweckmäßige Weiterbildungen der Erfindung sind den Patentansprüchen 2—4 entnehmbar.

Durch die erfindungsgemäße Anordnung des Dichtringes auf einem Radius, der im wesentlichen mit dem wirksamen Radius des Rollbalges übereinstimmt, ist die Hülse und damit verbunden der Dichtring frei von Axialkräften. Dies bewirkt eine hinsichtlich der Lebensdauer und der Leichtgängigkeit der Lagerung wesentlich verbesserte Konstruktion.

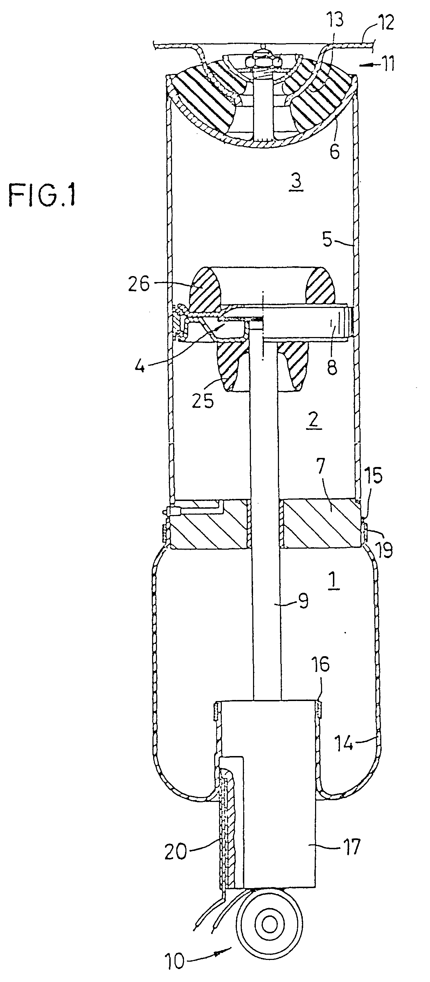

Weitere Merkmale der Erfindung ergeben sich aus der folgenden Beschreibung von Ausführungsbeispielen. Die Figur 1 dient lediglich zur Erläuterung der dem Gattungsbegriff entsprechenden Feder-Dämpfer-Einheit.

Die Zeichnungen zeigen in

Fig. 1 eine Längsschnittansicht einer Feder-Dämpfer-Einheit der gattungsgemäßen Art;

Fig. 2 Schnittansicht einer drehbar gelagerten Abwälzhülse einer Feder-Dämpfer-Einheit;

Fig. 3 eine Ansicht einer Vorderrad-Aufhängung mit einer Feder-Dämpfer-Einheit mit einer drehbar gelagerten Abwälzhülse;

Fig. 4 Schnittansicht eines Rollbalges mit drehbarer Befestigung nach einer weiteren Ausführungsform, und

Fig. 5 eine Längsschnittansicht einer Feder-Dämpfer-Einheit mit obenliegendem Federraum der gattungsgemäßen Art.

Die aus Fig. 1 ersichtliche Feder-Dämpfer-Einheit weist einen Federraum 1 und zwei Dämpferräume 2 und 3 auf. Beim Einfedern verringert sich das Volumen des Federraumes 1 und des Dämpferraumes 3, während das Volumen des Dämpferraumes 2 sich beim Einfedern vergrößert und beim Ausfedern verkleinert. Der Federraum 1 ist innerhalb eines Rollbalges 14 untergebracht, während die Dämpferräume 2 und 3 in einem zylindrischen Gehäuse 5 untergebracht und durch einen im Gehäuse 5 verschiebbaren Kolben 8 voneinander getrennt sind. Das Gehäuse 5 ist an einem Ende durch eine Decke und am anderen Ende durch einen Boden 7 abgeschlossen. Der Boden 7 trennt den Federraum 1 vom Dämpferraum 2. Im Kolben 8 ist ein Drosselorgan 4 angeordnet, über das der Dämpferraum 2 mit dem Dämpferraum 3 in Verbindung steht. Der Kolben 8 weist eine Kolbenstange 9 auf, die sich durch den Dämpferraum 2, den Boden 7 des Gehäuses 5 und den Federraum 1 erstreckt und dessen Ende in eine Abwälzhülse 17 für den Rollbalg 14 übergeht. Am äußeren Ende der Abwälzhülse 17 ist ein Anschluß- bzw. Anlenkpunkt 10 der Gas-Feder-Dämpfer-Einheit angeordnet, während der andere Anschluß- bzw. Anlenkpunkt 11 der Feder-Dämpfer-Einheit sich im Bereich der Decke 6 des Gehäuses 5 befindet.

Die Feder-Dämpfer-Einheit ist beispielsweise mit ihrem oberen Anlenkpunkt 11 an einem Teil 13 der Karosserie 12 und mit ihrem Anlenkpunkt 10 an einer Radachse angelenkt.

Im Boden 7 kann ein von außen zuschaltbares Drosselorgan angeordnet sein, das den Federraum 1 mit dem Dämpferraum 2 verbindet, mit der Wirkung, daß die Federcharakteristik und die Dämpfercharakteristik verändert werden. Ferner kann der Dämpferraum 3 über eine hohle Kolbenstange 9 und die Abwälzhülse 17 mit dem Federraum 1 verbunden sein. Diese Verbindung kann gedrosselt oder ungedrosselt sein und von außen zuschaltbar sein.

Der Rollbalg 14 ist mit seinem im Durchmesser größeren Ende 15 mittels eines Spannbandes 19 am Umfang des Bodens 7 des Gehäuses 5 befestigt, während das im Durchmesser kleinere Ende 16 am oberen Ende der Abwälzhülse 17 befestigt ist. Beim Einfedern wälzt sich der Rollbalg 14 auf dieser Abwälzhülse 17 ab.

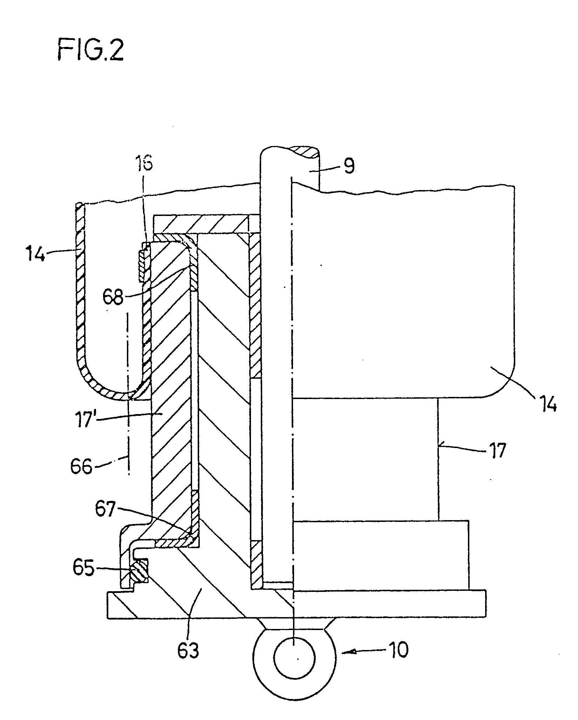

Wird die Feder-Dämpfer-Einheit zum Beispiel bei einer Vorderradaufhängung als schwenkbare Hülsenführung verwendet, dann kann auf ein oberes Schwenklager verzichtet werden, wenn gemäß den Fig. 2, 3 und 4 die Einspannung des Rollbalges 14 so ausgeführt wird, daß das Gehäuse 5 mit den Dämpferräumen 2 und 3 gegenüber dem Rollbalg 14 um die Achse des zylindrischen Gehäuses 5 verschwenkbar bzw. verdrehbar ist. Zu diesem Zweck ist bei dem Ausführungsbeispiel nach Fig. 2 die Abwälzhülse 17' verdrehbar am unteren Ende der Kolbenstange 9 gelagert. Die Abdichtung der Abwälzhülse 17' gegenüber dem am unteren Ende der Kolbenstange 9 befindlichen Lagerkörper 63 erfolgt mittels eines elastischen Dichtringes 65 auf einem Radius, der dem wirksamen Radius 66 des Rollbalges 14 entspricht. In diesem Falle ist die Abwälzhülse 17' frei von Axialkräften, Deshalb sind zur drehbaren Lagerung des Rollbalges 14 nur einfache Gleitlager 67, 68 erforderlich. Größere Schwenkmomente treten dabei nicht auf.

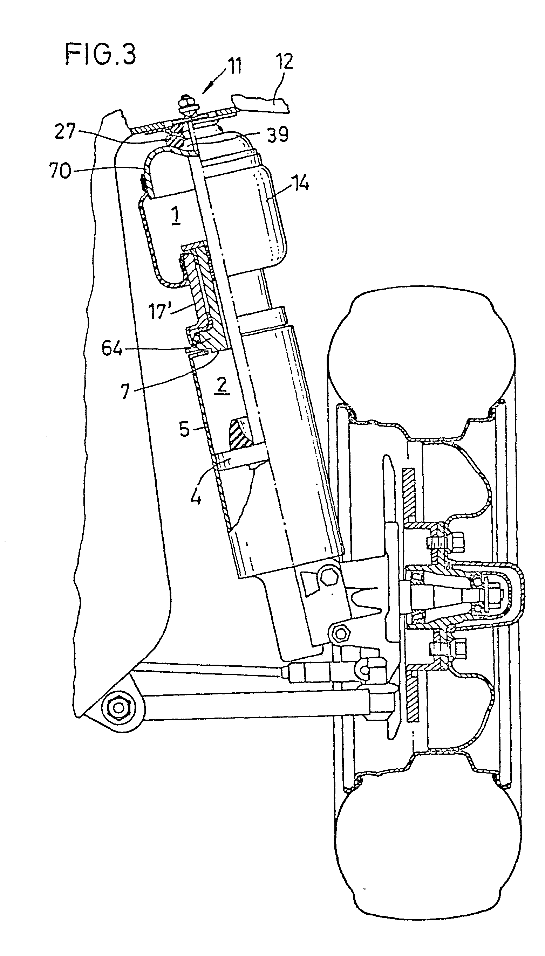

Der Dichtring 65 kann auch auf einem Radius angeordnet sein, der etwas vom wirksamen Radius 66 des Rollbalges 14 abweicht. Durch diese kleine Abweichung entstehen zwar geringere Axialkräfte, diese können aber erwünscht sein, um eine eindeutige definierte Lage der Teile zu erhalten. Bei dem Ausführungsbeispiel nach Fig. 3 ist der Rollbalg 14 mit seinem im Durchmesser größeren Ende auf einem napfförmigen Blechboden 70 befestigt, der am Ende der Kolbenstange 9 angebracht ist. Die Abwälzhülse 17' ist drehbar auf einem Lagerkörper 64 gelagert, der mit dem Boden 7 des Gehäuses 5 verbunden ist, Der Blechboden 70 bildet eine Kugelkalotte 39, auf die sich der Polsterring 31 abstützt.

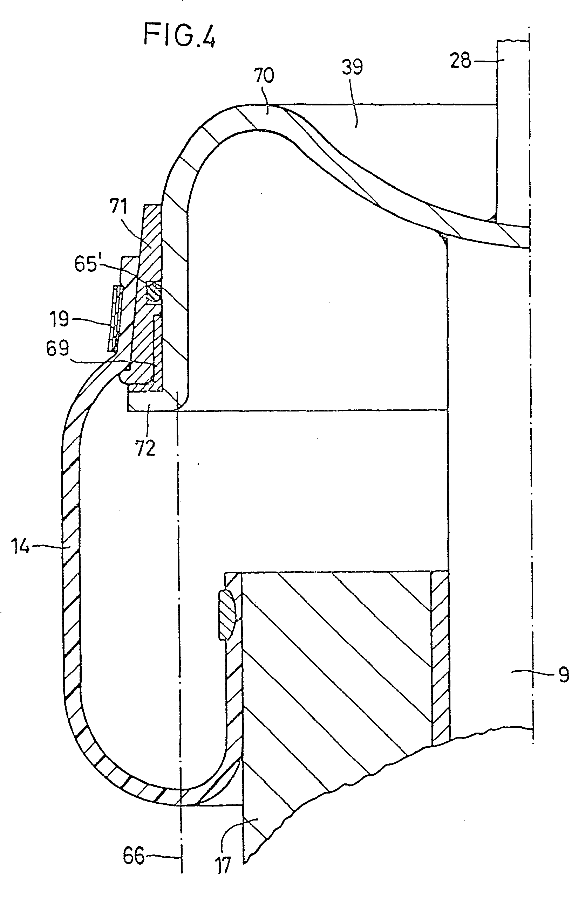

Bei dem Ausführungsbeispiel nach Fig. 4 ist der Rollbalg 14 mit seinem im Durchmesser größeren Ende auf einer konischen Hülse 71 befestigt, die über ein im Querschnitt L-förmiges Gleitlager 69 drehbar auf der axial sich erstreckenden Wand des mit der Kolbenstange 9 verbundenen napfförmigen Blechbodens 70 gelagert ist. Der Rand 72 des napfförmigen Blechbodens 70 ist radial abgewickelt.

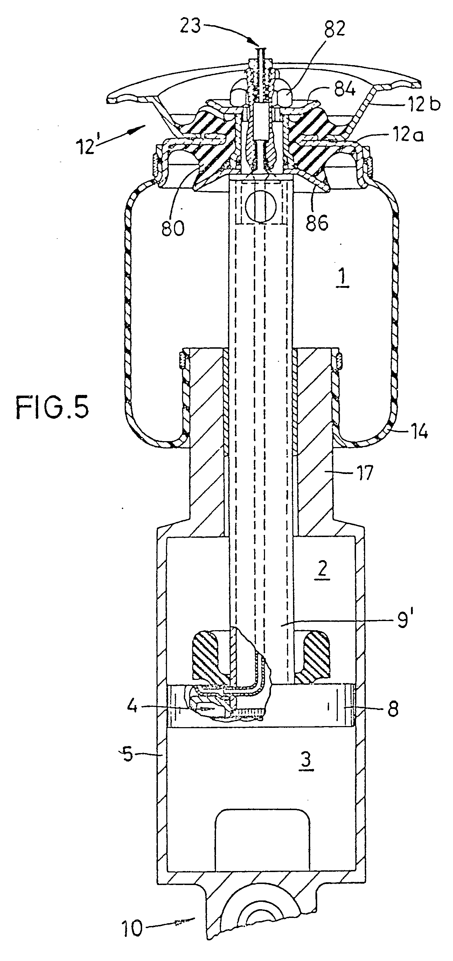

Die Fig. 5 zeigt eine Feder-Dämpfer-Einheit mit obenliegendem Federraum 1. Funktionsmäßig gleiche Teile sind mit gleichen Bezugszeichen versehen und nicht nochmals beschrieben.

Das Feder-Dämpfer-Element ist an der zu federnden Masse bzw. an der Karosserie des Kraftfahrzeuges über eine Konsole 12' befestigt, Die Konsole 12' setzt sich aus einem Halteteller 12b und einem napfförmigen Teil 12a zusammen, welche miteinander verschweißt sind, In eine zentrale Öffnung der Konsole 12' ist ein büchsenförmiges Gummilager 80 einvulkanisiert. Mittels einer auf die Kolbenstange 9' aufgeschraubten Mutter 82 und Haltescheiben 84, 86 ist die Kolbenstange 9' dichtend mit dem elastischen Gummilager 80 verbunden und so gehalten, daß kardanische Bewegungen gegenüber der Konsole 12' möglich sind.

Der Rollbalg 14 ist an dem Umfangsrand des napfförmigen Teils 12a gasdicht befestigt, so daß sich die Tragkraft des Rollbalges 14 im wesentlichen unmittelbar auf die Karosserie abstützt und das elastische, schallisolierende Gummilager 80 nicht belastet. Die Nachgiebigkeit des Rollbalges 14 und des Gummilagers 80 ermöglicht eine relativ große Verschwenkbarkeit. Die Kolbenstange 9 ist also über das elastische Gummilager 80 und das Gehäuse 5 über den Rollbalg 14 allseitig gelenkig mit den zufedernden Massen des Kraftfahrzeuges verbunden

**Patentansprüche**

1. Pneumatische Feder-Dämpfer-Einheit mit einem von einer Decke (6) und von einem Boden (7) abgeschlossen zylindrischen Gehäuse (5), das mit einem ersten Anschluß (11) versehen ist, einem in diesem Gehäuse (5) verschiebbar geführten Kolben (8), der das Gehäuse (5) in einem beim Einfedern größer werdenden luftgefüllten Dämpferraum (2) und einen beim Einfedern kleiner werdenden luftgefüllten Dämpferraum (3) unterteilt, einen im Kolben (8) angeordneten, in zwei Richtungen durchströmbaren Drosselorgan (4), einer im Kolben (8) starr befestigten und durch den Boden (7) des Gehäuses (5) und durch einen Federraum (1) geführten Kolbenstange (9), an deren Ende ein zweiter Anschluß (10) angeordnet ist, einem zwischen dem Gehäuse (5) und einem mit der Kolbenstange (9) verbundenen Teil (17) angeordneten Rollbalg (14), der den beim Einfedern kleiner werdenden Federraum (1) abdichtet, dadurch gekennzeichnnet, daß ein Ende des Rollbalges (14) auf einer um Ihre Achse verdrehbar und gasdicht an der Kolbenstange (9) oder am Gehäuse (5) gelagerten Hülse (17, 17', 71) befestigt ist und daß die Abdichtung der Hülse (17, 17', 71) mittels eines Dichtringes (65, 65') auf einem Radius erfolgt, der im wesentlichen mit dem wirksamen Radius (66) des Rollbalges (14) übereinstimmt.

2. Feder-Dämpfer-Einheit nach Anspruch 1, dadurch gekennzeichnnet, daß der Rollbalg (14) mit seinem im Radius größeren Ende gasdicht am Umfang eines napfförmigen und starr mit dem Kraftfahrzeug verbindbaren Teils (12 a) befestigt ist und die Kolbenstange (9') in einem im napfförmigen Teil (12a) angeordneten, elastischen Gummilager (80) kardanisch beweglich gehalten ist.

3. Feder-Dämpfer-Einheit nach Anspruch 2, dadurch gekennzeichnet, daß das Gummilager (80) im napfförmigen Teil (12a) einvulkanisiert ist.

4. Feder-Dämpfer-Einheit nach den Ansprüchen 2 und 3, dadurch gekennzeichnnet, daß das napfförmige Teil (12a) mit einem das Gummilager (80) umgebenden Halteteller (12b fest verbunden ist, dessen äußerer Randbereich als Befestigungsflansch ausgebildet ist.

**Revendications**

1. Une unité pneumatique d'amortissement élastique, avec un boîtier cylindrique (5) fermé par un couvercle (6) et un fond (7) et pourvu d'une première connexion (11), un piston (8) guidé à coulissement dans ce boîtier, séparant ledit boîtier (5) en une chambre d'amortissement (2) remplie d'air qui devient plus grande en compression et une chambre d'amortissement (3) remplie d'air qui devient plus petite en compression, un organe étrangleur (4) agencé dans le piston (8) et susceptible d'être traversé par un flux dans deux directions, une tige de piston (9) fixée rigidement au piston (8) et guidée à travers le fond (7) du boîtier (5) et une chambre d'élasticité (1), à l'extrémité de laquelle est agencée une deuxième connexion (10), un soufflet roulant (14) disposé entre le boîtier (5) et une pièce (17) reliée à la tige de piston (9) et qui scelle la chambre d'élasticité (1) qui devient plus petite en compression, caractérisée en ce qu'une extrémité du soufflet roulant (14) est fixée à une douille (17, 17', 71) tournant sur son axe et montée étanche sur la tige du piston (9) ou le boîtier (5), et en ce que l'étanchéité de la douille (17, 17', 71) est obtenue par une bague d'étanchéité (65, 65') sur un rayon correspondant sensiblement au rayon effectif (66) du soufflet roulant (14).

2. Unité d'amortissement élastique selon la revendication 1, caractérisée en ce que le soufflet roulant (14) est fixé étanche à son extrémité radiale la plus large sur la périphérie d'une pièce en cuvette (12a) susceptible d'être fixée au véhicule, et en ce que la tige de piston (9') est tenue mobile à la cardan dans un palier élastique en caoutchouc (80) disposé dans la pièce en cuvette (12a).

3. Unité d'amortissement élastique selon la revendication 2, caractérisée en ce que le palier en caoutchouc (80) est vulcanisé dans la pièce en cuvette (12a).

4. Unité d'amortissement élastique selon les revendications 2 et 3, caractérisée en ce que la pièce en cuvette (12a) est reliée fixement à une coupelle de retenue, (12b) entourant le palier en caoutchouc (80) et dont la région de bordure extérieure forme un flasque de fixation.

**Claims**

1. A pneumatic spring-loaded damping or shock absorbing apparatus with a cylindrical housing (5) which is closed by a top closure (6) and a bottom closure (7) and is provided with a first mounting bracket (11), a piston (8) slidably supported within said housing (5) dividing the housing (5) into an air-filled absorption chamber (2) the volume of which increases upon compression and into an air-filled absorption chamber (3) the volume of which reduces upon compression, a throttle means (4) positioned within the piston (8) for flow of pressure in two directions, a piston rod (9) rigidly affixed in the piston (8) and guided through the bottom (7) of the housing (5) and through a resilient chamber (1) and having positioned at one end a second mounting bracket (10), a resilient rolling bellows (14) positioned between the housing (5) and a member connected to the piston rod (9) and sealing the resilient compressible chamber (1) the volume of which reduces upon compression, characterized in that one end of the resilient rolling bellows (14) is attached on a sleeve (17, 17', 71) which is rotatable about its axis and mounted to the piston rod (9) or to the housing (5) in a gas-tight manner, and that the sealing of the sleeve (17, 17', 71) is effected by means of a sealing ring (65, 65') on a radius substantially corresponding to the effective radius (66) of the resilient rolling bellows (14).

2. A pneumatic spring-loaded damping or shock absorbing apparatus according to claim 1, characterized in that the resilient rolling bellows (14) with its radially larger end is attached in a gas-tight manner to the circumference of a cuplike member (12a) which can rigidly be connected to the motor vehicle, and that the piston rod (9') is supported in an elastic rubber bearing (80), which is positioned in the cup-like part (12a), in a manner allowing cardanic movements.

3. A pneumatic spring-loaded damping or shock absorbing apparatus according to claim 2 characterized in that the rubber bearing (80) is vulcanized into the cup-shaped member (12a).

4. A pneumatic spring-loaded damping or shock absorbing apparatus according to claims 2 and 3, characterized in that the trough-shaped member (12a) is firmly connected with a holding dish (12b) which surrounds the rubber bearing (80) and the outer edge region of which is formed as a mounting flange.

FIG.1

FIG.2

FIG.3

# FIG.4

FIG.5